# EUROPÄISCHE PATENTSCHRIFT

(11) **EP 0 432 131 B1**
(45) Veröffentlichungstag und Bekanntmachung des Hinweises auf die Patenterteilung: **06.11.1996**
(21) Anmeldenummer: 90890316.4
(22) Anmeldetag: 07.12.1990
(51) Int. Cl.: G01N 3/42, G01N 3/44

(54) **Eindringhärteprüfer**
Indentor hardness testing device
Recherche de la dureté par dispositif de pénétration

(30) Priorität: 07.12.1989 AT 2786/89
(43) Veröffentlichungstag der Anmeldung: 12.06.1991
(73) Patentinhaber: EMCO MAIER GESELLSCHAFT M.B.H., A-5400 Hallein (AT)
(72) Erfinder: Weissenbacher, Herbert, Ing., A-5412 Puch, Salzburg (AT); Brutmann, Karl, Ing., A-5412 Puch, Salzburg (AT)
(74) Vertreter: Casati, Wilhelm, Dipl.-Ing.

(56) Entgegenhaltungen:
- CH-A- 405 761
- DE-A- 3 710 741
- DE-U- 8 121 192
- US-A- 2 844 957

## Beschreibung

Die Erfindung betrifft einen Eindringhärteprüfer, dessen Eindringkörper an einem, in einem Gestell bewegbar gelagerten, insbes. gerade geführten Träger angeordnet ist, wobei zur Übertragung der Belastung auf den Eindringkörper ein am Träger des Eindringkörpers angreifendes Hebelsystem vorgesehen ist, das einen Kraftaufnehmer aufweist, der die auf ihn einwirkende Kraft in eine elektrische Größe umwandelt, wobei ein Antriebsaggregat, das bevorzugt einen Motor aufweist, für das die Belastung auf den Eindringkörper übertragende Hebelsystem vorgesehen ist. Eindringhärteprüfungen können mit und ohne Vorkraft ausgeführt werden. Als Eindringkörper finden je nach Art des Prüfverfahrens Kugeln, Pyramiden, Kegeln und auch Doppelkegeln (Grodzinski, Buchholz) Verwendung.

Bekannte Eindringhärteprüfgeräte bedürfen eines umfangreichen Handlings, vor allem was die Lastaufbringung über Gewichte, bei Vorlasthärteprüfverfahren der Einsatz von Zusatzgewichten, sowie die Dämpfung der Bewegung durch vorzusehende Ölbremsen betrifft.

Durch die Erfindung soll hier Abhilfe geschaffen werden. Dies wird dadurch erreicht, daß bei einem Eindringhärteprüfer der eingangs erwähnten Art, gemäß der Erfindung der Kraftaufnehmer elektrisch mit einer Vergleichsschaltung für den Vergleich der im Kraftaufnehmer generierten elektrischen Größe mit einem vorgegebenen, wählbaren Sollwert verbunden ist und daß der Ausgang der Vergleichsschaltung das Antriebsaggregat,das bevorzugt auch ein hoch, insbes. 1 : 900, untersetzendes Getriebe aufweist, steuert. Durch die Integration des Kraftaufnehmers in das Hebelsystem ist es möglich, die aktuelle Belastung des Eindringkörpers festzustellen und über den Ist/Sollwert-Vergleich die Belastung über das Antriebsaggregat laufend zu ändern, bis der Sollwert mit der vorgegebenen Genauigkeit erreicht ist. Das erfindungsgemäß ausgebildete Gerät kann in jeder Wareneingangskontrolle, Fertigungskontrolle, Labor, Inspektion, Härterei, Gießerei, Schmiede bzw. Ausbildungsstätte eingesetzt werden.

Es können damit die Prüfverfahren nach VICKERS, ROCKWELL, BRINELL sowie für KUNSTSTOFF gemäß DIN 51224, 51225, 50103, 50351 und 53456 ausgeführt werden. Auch können von den genannten Belastungen abweichende Lasten bzw. sich erhöhende Lasten unschwer realisiert werden.

Bei einem Eindringhärteprüfer, bei dem das Hebelsystem einen an dem Träger des Eindringkörpers angreifenden, im Gestell des Eindringhärteprüfers schwenkbar gelagerten Hebel aufweist, kann die Erfindung etwa dadurch verwirklicht werden, daß weiters an dem im Gestell schwenkbar gelagerten Hebel, der Kraftaufnehmer befestigt ist, mit dem, insbes. schwenkbar ein Koppelhebel verbunden ist, der insbes. über eine Kurbel bzw. über einen Exzenter durch den Motor des Antriebsaggregates antreibbar ist. Der im Gestell schwenkbar gelagerte Hebel bildet mit dem Koppelhebel und dem Exzenter ein Gelenksviereck. Praktisch erfolgt die Anordnung des Gelenksvierecks so, daß der Koppelhebel annähernd vertikal liegt. Im betrieb führt dann der Koppelhebel eine Art Pendelbewegung um den Anlenkpunkt des Belastungshebels für den Träger des Eindringkörpers aus.

Eine vor allem konstruktiv einfache Ausbildung zeichnet sich dadurch aus, daß in Weiterbildung des Erfindungsgegenstandes, der im Gestell schwenkbar gelagerte Hebel gegabelt ist, wobei im den Träger des Eindringkörpers umfassenden Gabelteil des Hebels zwei Rollen od.dgl. Mitnehmer, insbes. einander gegenüberliegend, angeordnet sind, die in Aussparungen eingreifen, welche am Träger des Eindringkörpers, insbes. an einer auf den Träger aufgeschobenen Mitnahmeglocke angeordnet und bevorzugt als umlaufende Nut ausgebildet sind.

Zur Bestimmung der Eindringtiefe des Eindringkörpers ist es zweckmäßig, einen Meßtaster vorzusehen und diesen am Träger des Eindringkörpers einerseits und am Grundkörper anderseits abzustützen.

Die Erfïndung wird nachstehend anhand der Zeichnung beispielsweise näher erläutert. Es zeigen,

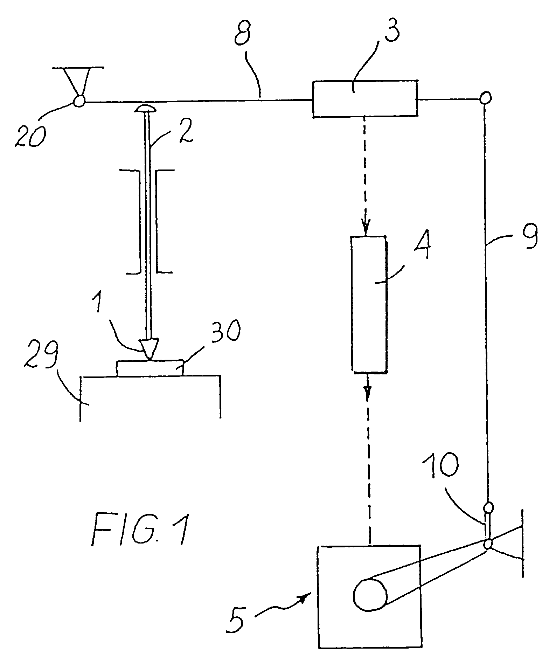

Fig. 1 in einem Schema den Aufbau des erfindungsgemäß gestalteten Härteprüfers,
Fig. 2 eine gegenüber Fig. 1 Details zeigende Ausführungsform und
Fig. 3 die Vergleichsschaltung in Form eines Blockschaltbildes.

Der Eindringkörper des Eindringhärteprüfers ist in der Zeichnung mit 1 bezeichnet. Der Eindringkörper 1 ist an einem Träger 2, bevorzugt austauschbar befestigt, der in einem Gestell bewegbar gelagert ist. Bevorzugt ist der Träger 2 des Eindringkörpers 1 im Gestell gerade geführt. Zur Übertragung der Belastung auf den Eindringkörper 1 ist ein am Träger 2 des Eindringkörpers 1 angreifendes Hebelsystem vorgesehen. In das Hebelsystem ist ein an sich bekannter Kraftaufnehmer 3 eingebaut. Als Kraftaufnehmer kann dabei ein solcher der Firma Hottinger Baldwin Meßtechnik GmbH aus Darmstadt Verwendung finden. Bei einem solchen Kraftaufnehmer sind auf dem Meßelement aus hochvergütetem Stahl Dehnungsmeßstreifen angeordnet. Die Dehnungsmeßstreifen werden dabei von einem aufgelöteten Faltenbalg aus Edelstahl vor äußeren Einflüssen geschützt. Der Meßkörper ist oberflächenvernickelt und besteht aus einem einseitig einzuspannenden Doppelbiegebalken, an dessen freiem Ende die zu messende Zug- oder Druckbelastung eingeleitet wird. Die auf den Kraftaufnehmer einwirkende Last wird in ein analoges elektrisches Signal umgeformt. Die Kalibrierung der Kraftaufnehmer erfolgt entweder für Wägezellen unter Berücksichtigung der Erdbeschleunigung in der Masseneinheit "Kilogramm" oder aber für Kraftaufnehmer in der Krafteinheit "Newton".

Der Kraftaufnehmer 3 ist elektrisch mit einer Vergleichsschaltung 4 verbunden. Diese Schaltung 4 vergleicht die im Kraftaufnehmer 3 generierte elektrische Größe mit einem vorgegebenen, wählbaren Sollwert. Der Ausgang der Vergleichsschaltung 4 steuert ein Antriebsaggregat 5 für das Hebelsystem, wobei das Antriebsaggregat bevorzugt einen DC Motor 6 und ein Getriebe 7 mit hoher Übersetzung, z.B. 1 : 900, aufweist. Als Antriebsaggregat könnte auch ein hydraulisches Kolben/Zylinderaggregat Verwendung finden.

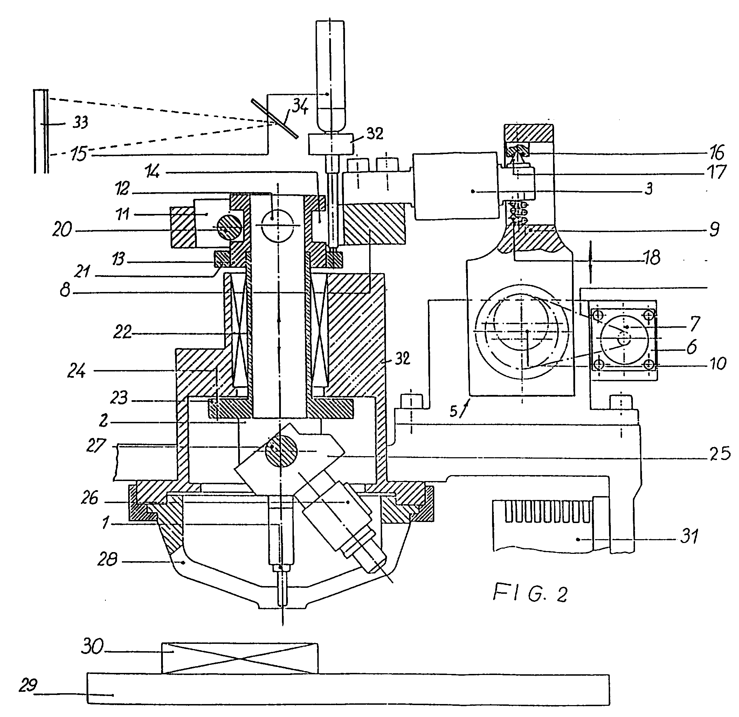

In dem dargestellten Ausführungsbeispiel weist das Hebelsystem einen am dem Träger 2 des Eindringkörpers 1 angreifenden, im Gestell des Eindringhärteprüfers schwenkbar gelagerten Hebel 8 auf, an dem der Kraftaufnehmer 3 befestigt ist. Mit dem Kraftaufnehmer 3 ist schwenkbar ein Koppelhebel 9 verbunden, der insbes. über eine Kurbel bzw. über einen Exzenter 10 durch den Motor 6 des Antriebsaggregates 5 antreibbar ist. Wie Fig. 2 erkennen läßt, erfolgt der Anschluß des Koppelhebels 9 an den Kraftaufnehmer 3 über eine Kegelspitzenlagerung, die in einer Gabel des Koppelhebels 9 angeordnet ist und eine Pfanne 16 aufweist, deren Kegelwinkel bevorzugt 90° beträgt, wobei in dieser Pfanne 16 ein Kegel mit gegenüber der Kegelpfanne 16 kleinerem Winkel von z.B.60° eingreift. Der mit dem Lastaufnehmer 3 fest verbundene Kegel 17 der Kegelspitzenlagerung wird durch zwei Zugfedern 18, die an der Gabel exakt in der Ebene der Kegelspitze abgestützt sind, in die Pfanne 16 gedrückt. Der Schwenkhebel 8, der Koppelhebel 9 und der Exzenter 10 bzw. die ihn ersetzende Kurbel bilden ein Gelenksviereck.

Als Antriebsmotor 6 kann ein 4 Watt DC-Motor mit Impulsgeber (500 Impulse/U) vorgesehen werden. Die Übertragung des Antriebes vom Getriebe 7 auf den Exzenter 10 bzw. die Kurbel erfolgt bevorzugt durch einen Zahnriementrieb. Der Zahnriementrieb erlaubt eine Untersetzung von 1: 10.

Wie Fig. 2 erkennen läßt, ist der im Gestell schwenkbar gelagerte Hebel 8, der den Träger 2 des Eindringkörpers 1 belastet, gegabelt ausgebildet. Der Gabelteil 11 umfaßt dabei den Träger 2 des Eindringkörpers 1 und hat in dem den Träger 2 umfassenden Gabelteil 11 zwei Rollen 12 od.dgl. Mitnehmer angeordnet. Als Mitnehmer können dabei selbstverständlich auch Stifte, welche die Rollen 12 ersetzen, angeordnet werden, doch sind Rollen 12 wegen der geringeren Reibung zu bevorzugen. Die Rollen 12 sind im Gabelteil 11 einander gegenüberliegend angeordnet und greifen in Aussparungen ein, welche am Träger 2 des Eindringkörpers 1 angeordnet sind. Die Aussparungen werden dabei bevorzugt von einer umlaufenden Nut 14 gebildet, welche in einer Mitnahmeglocke 13 angeordnet ist, welche auf den Träger 2 des Eindringkörpers 1 aufschiebbar und fixierbar ist. Das Schwenklager des Hebels 8 ist in den Zeichnungen mit 20 bezeichnet. Die Angriffsstelle des Koppelhebels 9 am Hebel 8 ist vom Schwenklager 20 des Hebels bevorzugt 6 Einheiten entfernt und die Angriffsstelle der Mitnehmer am Träger des Eindringkörpers 1 ist eine Einheit vom Schwenklager des Hebels 8 entfernt. Das Übersetzungsverhältnis am Hebel 8 beträgt somit 6: 1.

Ein Meßtaster 15 für die bestimmung der Eindringtiefe des Eindringkörpers 1 ist am Träger 2 des Eindringkörpers 1 abgestützt. Beim dargestellten Ausführungsbeispiel erfolgt die Abstützung des Meßtasters 15 am Träger 2 des Eirdringkörpers 1 durch einen Bund 21, der an der Mitnahmeglocke 13 befestigt ist. Auf den Trägers 3 ist eine Führungshülse 22 aufgezogen, die am dem Eindringkörper 2 zugewandten Ende mit einem Flansch 23 versehen ist, der einen parallel zur Achse des Trägers 2 angeordneten Zapfen 24 trägt, der im Gestell geführt ist und ein Verschwenken des Trägers 2 in seiner Geradführung verhindert. Der Träger 2 ist mit einem Revolver 25 versehen, der den Eindringkörper 1 und winkelmäßig gegen den Eindringkörper 1 versetzt, ein Mikroskopobjektiv 26 trägt. Der Revolver 25 ist in einem SChwenklager 27 des Trägers 2 gelagert.

Mit dem Gestell fest verbunden ist ein Prüfkopf 28, der den Eindringkörper 1 und das Mikroskopobjektiv 26 schützt. Unterhalb des Prüfkopfes 28 befindet sich ein Prüftisch 29, auf welchen das zu prüfende Werkstück 30 aufgelegt werden kann. Zu Beleuchtungszwecken ist im Gestell des Eindringhärteprüfers eine Halogenlampe 31 vorgesehen. Das Mikrosk-opobjektiv 26 kann austauschbar am Revolver 25 genauso wie der Eindringkörper 1 befestigt sein. Der Auflagetisch 29 kann stufenlos in der Höhe, d.h. in seiner Lage gegenüber dem Eindringkörper 1, verstellt werden. Das vom Objektiv 26 gelieferte bild des Eindruckes am Werkstück 30 kann gegebenenfalls nach Umlenkung durch einen Spiegel 34 auf einem Mattbildschirm 33, z.B. mit einem Durchmesser von 150 mm, in 20, 40, 95, 190 sowie 370facher Vergrößerung dargestellt werden. Bei Automatisierung des Prüfungsablaufes können bis zu 1000 Prüfungen/h ausgeführt werden.

Bei Durchführung einer Prüfung fährt der Prüftisch 29 mit dem darauf befindlichen Werkstück 30 nach oben gegen den Prüfkopf 28. Der Eindringkörper 1 steht in seiner Ruhestellung ca. 0,3 mm hinter der Prüfkopfebene, sodaß nach einem Weg von 0,5 mm nach Erreichen der Prüfkopfebene der Eindringkörper 1 erstmalig auf das Werkstück 30 auftrifft. Der Prüftisch wird in seiner Bewegung stillgesetzt, wodurch ein Impuls ausgelöst wird, der das Eindringtiefenmeßsystem startet. Durch das Auftreffen des Eindringkörpers 1 auf das Werkstück 30 wird im Kraftaufnehmer 3 eine Belastung hervorgerufen. Zur Verstärkung der Signale des Kraftaufnehmers 3 wird eine sogenannte "Gleichspannungs-Meßverstärkerkarte" angewendet. Eine solche Karte kann sowohl zur Messung statischer Größen als auch bei wechselnden Größen eingesetzt werden, wobei die Frequenz der Änderungen bis zu 10 kHz betragen kann. Der Regelbereich der Gleichspannungs-Meßverstärkerkarte erstreckt sich von 0 bis 10 V. Der Wert "Null" entspricht dabei einer Nennlast von 0 kg, und der Wert "10 Volt" einer Nennlast von 50 kg. Die Linearitätsabweichung über den Bereich zwischen 0 und 10 V beträgt dabei nur 0,01%. Berücksichtigt man, daß der Hebel 8 eine Übersetzung von 1: 6 liefert und die Sollspannung 10 V = 50 kg beträgt, so kann am Eindringkörper 1 eine Maximalkraft von 300 kg erreicht werden. Werden kleinere Lasten gewünscht, so können diese bei einer anderen Prüfmethode, z.B. HRC = 150 kg, dem entspricht ein Wert von 5 V, über eine Regelelektronik angewählt werden.

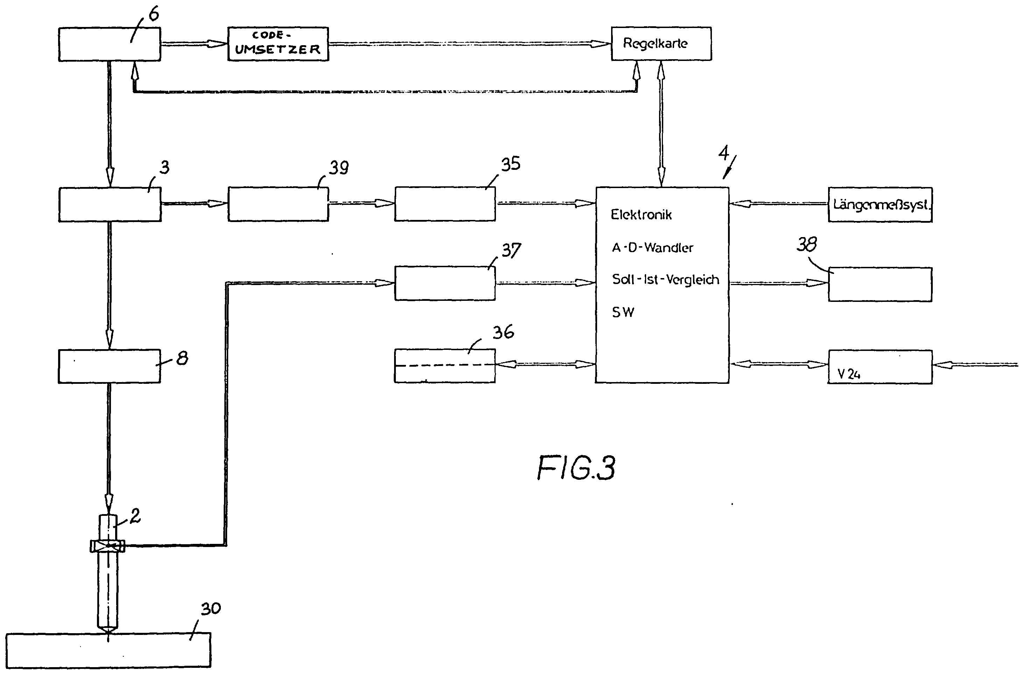

Zur Erläuterung der Arbeitsweise sei als Prüfmethode HVT15, d.h. ein Vickers-Eindringkörper mit einer Sollbelastung von 15 kg, angewendet. Durch die Anwahl der Prüfmethode (bei 36, wo auch andere Parameter, z.B. Statistik, Zähler, Speicher, Balkengrafik, Zeiten, Toleranzen, Umwertungen, Korrektur-Faktoren, Betriebsarten usw., bevorzugt in Form eines Schlüsselcodes eingegeben werden können), wird eine Sollspannung von 0,5 V vorgegeben, was einer Sollbelastung von 15 kg entspricht. Sobald ein Werkstück 30 zwischen dem Prüfkopf und dem Prüftisch 29 geklemmt ist und der Prüftisch 29 stillgesetzt wird, erfolgt der Start des Motors 6. Dieser treibt über das Getriebe 7 mit einer Untersetzung von 1: 900 den Zahnriemen, der mit einer Untersetzung von 1: 10 schließlich den Exzenter 10 im Uhrzeigersinn dreht. Dieser Exzenter 10 bewegt den Koppelhebel 9 nach unten und verschwenkt damit den Hebel 8 um das Schwenklager 20. Durch die Verschwenkung des Hebels 8 wird auch der Träger 2 des Eindringkörpers mit dem Eindringkörper 1 nach unten linear bewegt. Nach dem Auftreffen des Eindringkörpers 1 auf das Werkstück 30 signalisiert der Kraftaufnehmer 3 bevorzugt in Form eines Analog-Si gnals 39 über den Meßverstärker 35 eine bestimmte Spannung, die unter 0,5 V liegt. Nun wird der Motor 6 mit Impulsgeber solange gedreht, bis am Meßverstärker eine Spannung von exakt 0,5 V entsprechend einer Belastung von 15 kg, erreicht wird. Durch das Fließen des Materials des Werkstückes 30 unter dem Druck des Diamanteindringkörpers ist über eine frei wählbare Zeit ein ständiges Nachregeln, bedingt durch das Abfallen der Istspannung gegenüber der Sollspannung notwendig, um eine Belastung von 15 kg aufrechterhalten zu können. Mittels des Motors 6, der die Nachregelung vornimmt, können solcherart genaue Belastungen zwischen 1 und 300 kg bei weniger als einem Prozent Abweichung erreicht werden. Bei Materialien größerer Härte wird der eingestellte Sollwert wesentlich früher erreicht als bei Materialien geringerer Härte. Die in Fig. 3 als Block dargestellte Regelkarte dient zur oberwähnten elektronischen Nachregelung der Prüflast auf den gewünschten konstanten Wert. Dieser konstante Wert wird ja nicht unmittelbar nach dem Eindringen des Eindringkörpers erreicht, da durch das Fließen des Materials geringfügige Schwankungen der belastenden Kraft eintreten. Die Regelkarte hat daher die Aufgabe, Impulse an den Steuermotor abzugeben, um über die Hebel 8 und 9 auf den Träger 2 des Eindringkörpers einzuwirken und die Last auf den erforderlichen konstanten Wert einzuregeln.

Der maximale Weg des Exzenters 10 wird dabei so ausgelegt, daß dieser bei maximaler Sollast auch bei äußerst weichen Materialien ausreicht, um über den Kraftaufnehmer 3 (Wägezelle) und den Meßverstärker den gewünschten Sollwert zu bekommen. Der maximale Weg des Eindringkörpers vor die Ebene des Prüfkopfes 28 kann dabei ca. 1,2 mm betragen. Der Meßtaster 15, der auch als Digital-Meßtaster 37 ausgebildet sein kann, stellt den Impulsgeber dar und hat die Aufgabe, das sich in vertikaler Richtung bewegende System, also den Weg des Eindringkörpers 1, auf ± 0,05 µm genau zu messen. Dies ist für das Eindringtiefen-Differenzmeßverfahren, wie es für die Rockwell-Prüfung in DIN 51224 vorgeschrieben ist, erforderlich. Hiebei wird zuerst mit einer ersten Vorlast von z.B. 10 kg belastet, diese Belastung stellt die Meßbasis Null dar. Nach dieser Belastung von 10 kg wird eine Zusatzlast von 140 kg aufgebracht, so daß die Gesamtlast, die auf den Eindringkörper 1 wirkt, 150 kg beträgt. Nach dieser Belastung in Höhe von 150 kg wird auf die Vorlast von 10 kg entlastet. Der Differenzbetrag der Eindringtiefe des Eindringkörpers 1 zwischen der ersten und der zweiten Vorlast, nachdem dazwischen die Zusatzlast von 140 kg aufgebracht wurde, wird als Maß für die Härte des Materials ermittelt und kann in dem erfindungsgemäß ausgestatteten Eindringhärteprüfgerät digital auf einem LCD-Display 36 angezeigt werden. Dieses Display besitzt auch eine Tastatur zur Auswahl der Prüfmethode (Brinell, Vickers usw). Zum Ausdrucken gewünschter Daten (eingeschlossen das ermittelte Härtemaß) kann an die Elektronik 4 auch ein Drucker 38 angeschlossen sein. Weiters kann ein Schnittstellenausgang V24 - RS 232 vorgesehen sein. Über diese Schnittstelle können sämtliche Meßwerte, Parameter, Funktionen, Bewegungen sowie Kommandos von bzw. in Richtung Elektronik geführt werden (Software-Hand Shake). Schließlich kann auch gemäß Fig. 3 ein Längenmeßsystem vorgesehen sein, welches dazu dient, die Eindringtiefe des Eindringkörpers zu bestimmen. Das Längenmeßsystem kann einen inkrementalen Weggeber aufweisen, der als Glasmeßgeber (Glasmaßstab) ausgebildet ist. Der Code-Umsetzer stellt einen Rotationsweggeber dar, der 500 Impulse pro Motorumdrehung zur Kontrolle der Kraftregelung liefert.

## Patentansprüche

1. Eindringhärteprüfer, dessen Eindringkörper (1) an einem, in einem Gestell bewegbar gelagerten, insbes. gerade geführten Träger (2) angeordnet ist, wobei zur Übertragung der Belastung auf den Eindringkörper (1) ein am Träger (2) des Eindringkörpers (1) angreifendes Hebelsystem (8,9,10) vorgesehen ist, das einen Kraftaufnehmer (3) aufweist, der die auf ihn einwirkende Kraft in eine elektrische Größe umwandelt, wobei ein Antriebsaggregat (5), das bevorzugt einen Motor (6) aufweist, für das die Belastung auf den Eindringkörper (1) übertragende Hebelsystem vorgesehen ist, dadurch gekennzeichnet, daß der Kraftaufnehmer (3) elektrisch mit einer Vergleichsschaltung (4) für den Vergleich der im Kraftaufnehmer (3) generierten elektrischen Größe mit einem vorgegebenen, wählbaren Sollwert verbunden ist und daß der Ausgang der Vergleichsschaltung (4) das Antriebsaggregat, das bevorzugt ein hoch, insbes. 1 : 900, untersetzendes Getriebe (7) aufweist, steuert.

2. Eindringhärteprüfer nach Anspruch 1, bei dem das Hebelsystem einen an dem Träger des Eindringkörpers angreifenden, im Gestell des Eindringhärteprüfers schwenkbar gelagerten Hebel aufweist, dadurch gekennzeichnet, daß an dem im Gestell schwenkbar gelagerten Hebel (8), der Kraftaufnehmer (3) befestigt ist, mit dem, insbes. schwenkbar ein Koppelhebel (9) verbunden ist, der insbes. über eine Kurbel bzw. über einen Exzenter (10) durch den Motor (6) des Antriebsaggregates (5) antreibbar ist.

3. Eindringhärteprüfer nach Anspruch 1 oder 2, dadurch gekennzeichnet, daß der im Gestell schwenkbar gelagerte Hebel (8) gegabelt ist, wobei im den Träger (2) des Eindringkörpers (1) umfassenden Gabelteil (11) des Hebels (8) zwei Rollen (12) od.dgl.Mitnehmer, insbes. einander gegenüberliegend, angeordnet sind, die in Aussparungen eingreifen, welche am Träger (2) des Eindringkörpers (1), insbes. an einer auf den Träger (2) aufgeschobenen Mitnahmeglocke (13) angeordnet und bevorzugt als umlaufende Nut (14) ausgebildet sind.

4. Eindringhärteprüfer nach einem der Ansprüche 1 bis 3, dadurch gekennzeichnet, daß in an sich bekannter Weise am Träger (2) des Eindringkörpers (1) einerseits bzw. am Grundkörper (32) anderseits ein Meßtaster (15) für die Bestimmung der Eindringtiefe des Eindringkörpers (1) abgestützt ist.

## Claims

1. An indentor hardness testing device whose indentor body (1) is arranged on a support (2) which is movably held, especially straight guided, in a frame a lever system (8, 9, 10) acting on the support (2) of the indentor body (1) is provided for transmitting the load on to the indentor body (1), which system is provided with a force transducer (3) which converts the force acting on it into an electric value, a drive unit (5), preferably comprising a motor (6), being provided for the lever system transmitting the load on to the indentor body (1), characterized in that the force transducer (3) is electrically connected with a comparator circuit (4) for the comparison of the electrical value generated in the force transducer (3) with a predetermined selectable setpoint value and that the output of the comparator circuit (4) controls the drive unit which is preferably provided with a highly reducing gear (7), reducing in particular 1:900.

2. An indentor hardness testing device as claimed in claim 1, wherein the lever system is provided with a lever acting on the support of the indentor body and being pivoted in the frame of the indentor hardness testing device, characterized in that the force transducer (3) is attached to the lever (8) being pivoted in the frame, to which force transducer is attached a coupling lever (9), in particular in a swivellable manner, which is drivable via a crank or via an eccentric (10) by the motor (6) of the drive unit (5).

3. An indentor hardness testing device as claimed in claim 1 or 2, characterized in that the lever (8) pivoted in the frame is bifurcated, with two rolls (12) or similar drives, in particular mutually opposite ones, being arranged in the bifurcated portion (11) of the lever (8) surrounding the support (2) of the indentor body (1), which rolls engage in recesses which are provided on the support (2) of the indentor body (1), in particular on a bell-like engagement means (13) which is slipped on the support (2), and are preferably arranged as a circumferential groove (14).

4. An indentor hardness testing device as claimed in one of the claims 1 to 3, characterized in that, in a manner known per se, a measuring sensor (15) for determining the penetration depth of the indentor body (1) rests on the support (2) of the indentor body (1) on the one hand and on the basic body (32) on the other hand.

## Revendications

1. Duromètre de pénétration, dont le poinçon (1) est disposé sur un support (2) logé de manière mobile dans une baie et notamment guidé de manière rectiligne, un dispositif de levier (8,9,10), lequel agit sur le support (2) du poinçon (1) et présente un transducteur de force (3) convertissant la force à laquelle il est soumis en une grandeur électrique, étant prévu à des fins de transmission de la sollicitation au poinçon (1), un mécanisme d'entraînement (5) de préférence pourvu d'un moteur (6) étant prévu pour le dispositif de levier transmettant la sollicitation au poinçon (1), caractérisé en ce que le transducteur de force (3) est relié électriquement à un circuit comparateur (4) destiné à la comparaison de la grandeur électrique générée dans le transducteur de force (3) avec une valeur de consigne prédéterminée et sélectionnable et en ce que le mécanisme d'entraînement (5) pourvu de préférence d'une transmission (7) à démultiplication élevée, notamment 1 : 900, est commandé par la sortie du circuit comparateur (4).

2. Duromètre de pénétration selon la revendication 1 sur lequel le dispositif de levier présente un levier logé de manière pivotante dans la baie du duromètre et agissant sur le support du poinçon (1), caractérisé en ce que le transducteur de force (3) est fixé sur le levier (8) logé de manière pivotante dans la baie et est relié à un levier de couplage (9) notamment de manière pivotante et pouvant être entraîné par le moteur (6) du mécanisme d'entraînement (5) notamment au moyen d'une manivelle ou d'un excentrique (10).

3. Duromètre de pénétration selon la revendication 1 ou 2 caractérisé en ce que le levier (8) logé de manière pivotante dans la baie est fourchu, deux poulies (12) ou moyens d'entraînement similaires, notamment placées l'une en face de l'autre, étant disposées dans la partie de la fourche (11) entourant le support (2) du poinçon (1), ces poulies (12) mordant dans des évidements disposés sur le support (2) du poinçon (1), notamment sur une cloche d'entraînement (13) glissée sur celui-ci, et présentant de préférence la forme d'une rainure circulaire (14).

4. Duromètre de pénétration selon l'une des revendications 1 à 3 caractérisé en ce qu'un palpeur de mesure (15) destiné à déterminer la profondeur de pénétration du poinçon (1) s'appuie de manière connue en soi sur le support (2) du poinçon (1) d'un côté et sur la base (32) d'un autre côté.
